Europäisches Patentamt

**European Patent Office**

**Office européen des brevets**

(19)

(11) Publication number: **0 047 633**
**A2**

# (12) EUROPEAN PATENT APPLICATION

(21) Application number: **81304025.0**

(22) Date of filing: **03.09.81**

(51) Int. Cl.³: **F 24 D 3/00**, F 28 F 21/06

(30) Priority: **08.09.80 GB 8028941**

(43) Date of publication of application: **17.03.82**
**Bulletin 82/11**

(84) Designated Contracting States: **DE NL**

(71) Applicant: **Hinds, James Frederick, Rowson's Nurseries**
**Vines Cross, Heathfield Sussex (GB)**

(72) Inventor: **Hinds, James Frederick, Rowson's Nurseries**
**Vines Cross, Heathfield Sussex (GB)**

(74) Representative: **Webb, Frederick Ronald et al, G.F.**
**Redfern & Co. Marlborough Lodge 14 Farncombe Road,**
**Worthing West Sussex BN11 2BT (GB)**

(54) **Area heating or cooling device.**

(57) A heating device, particularly for the area heating of greenhouses, but which may be used for cooling, or as a solar panel, comprises a substrate (10) of expanded polystyrene, preferably made up of abutting modules (11, 11', 12) and on which is arranged a flexible tube (17) through which a heating or cooling fluid is passed from a fluid inlet (18) to a fluid outlet (19) located at the same edge of the substrate but at opposite ends thereof, the tube following a double serpentine path such that the incoming (hotter or cooler) part of the tube is adjacent to and at a substantially constant distance from the return (cooler or hotter) part of the tube. This leads to an increased uniformity of heat production or absorption over the surface of the substrate. The tube (17) is preferably located in grooves (16) in the substrate surface defining the serpentine path.

## "AREA HEATING OR COOLING DEVICE"

The present invention relates to area heating devices, which can also be used for cooling, and which are particularly suitable for use in the heating of greenhouses either for floor heating, or on either fixed or mobile benches. They are not, however, limited to this application but can be generally used wherever a readily portable area heating or cooling device is required. In the following description of the invention, for the sake of clarity, the invention will usually be described in its application to an area heating device, but it will be appreciated that it can equally be used for cooling, by using a cold operating fluid.

The heating means hitherto used in greenhouses and like propagating areas, both for floor heating and for soil or air heating on fixed or mobile benches, have had the disadvantages of a relatively high weight and high capital output and running costs. For example, for floor heating, electric heating cables buried in sand have been extensively used, which arrangement is both heavy and expensive, both to install and to run.

It has also been proposed to utilise hot water or air passing through a pipe system for area heating in greenhouses, but the arrangements hitherto used for this purpose have the disadvantage that they produce a marked temperature gradient across the heated area, and are again expensive to install and run.

It is an object of the present invention to provide a low cost area heating device, particularly but not exclusively for use in greenhouses, which can be applied without difficulty to areas of widely differing sizes, but will nevertheless produce a substantially even output of heat over the heated area, and which can be operated with a relatively low temperature heat source and with low capital and running costs.

According to the invention, an area heating or cooling device comprises a heat-insulating substrate having arranged thereon a flexible tube for the passage of a fluid heating or cooling medium from a fluid inlet to a fluid outlet arranged at the same edge of the substrate, but adjacent opposite ends thereof, said tube being arranged to follow a continuous double serpentine path from said inlet to said outlet at the substrate surface such that, throughout at least the greater part of the length of the path, the incoming part of the tube carrying hotter (or respectively cooler) fluid in use lies adjacent to and at a substantially constant distance from the return part of the tube carrying cooler (or respectively hotter) fluid in use, thereby producing a substantially uniform output or absorption of heat respectively over substantially the whole surface area of the substrate.

While the substrate can be made of any suitable heat-insulating material, it is preferred to make it of a foamed plastics material, particularly foamed polystyrene, which is not only very light in weight and cheap to produce, but also lends itself to use in a modular system as will hereinafter be described. The substrate can be of any suitable thickness but preferably has a thickness of about 2½ - 3 inches (6 - 7 cm).

The pipe used is preferably a known ridged highly flexible tube of plastics material which can be curved without kinking even at a diameter of about 1 inch (2.5 cm). While, if desired, the tube can be secured on the surface of the substrate, it is preferably housed within a groove formed in the surface of the substrate of sufficient width and depth to accommodate the tube and following the required path. The location of the fluid inlet and outlet at opposite ends of the same edge of the substrate, apart from being more convenient so far as the introduction and withdrawal of the heating fluid is concerned, allows a considerable simplification in the design of the individual modules when a modular construction for the substrate is used, as will now be described.

In such a preferred construction, the substrate is made up of a plurality of rectangular modules laid in abutting relationship, each of the modules having grooves therein, forming a part of the serpentine path, so that when the modules are appropriately arranged, the grooves form the serpentine path for the tube, the fluid inlet being located in a module at one end of an edge of the substrate and the fluid outlet in another module located at the opposite end of this wedge.

The modules may be held in abutting relationship merely by the tube, but preferably they are held together by a metal framework formed, for example, from extruded aluminium sections.

The modules used may be of a limited number of different types, each type having a different groove pattern, various numbers of the different types of module being used in various orientations to build up a substrate having the required double serpentine groove path.

In a preferred form of modular substrate, the modules include one having a groove pattern which can be abutted against an identical model in the inverted position to form a longitudinal section of the serpentine path, further sections extending in the longitudinal direction being formed by further such pairs of modules in abutting relationship, the grooves of each pair of modules co-operating with laterally-abutting pairs of modules to form the serpentine path. The fluid inlet and outlet are respectively located in the two modules of the first pair. The location of the inlet and outlet in different modules simplifies groove design of the modules.

In order to increase the transverse dimension of the path, the modules of each such pair may be arranged to be separated by a central module of different design having a pattern of parallel grooves therein which co-operate with the grooves of the two end modules to form a longitudinal section of the path. In this way, a substrate of any desired size can be built up.

The end loop of the double serpentine path at its end remote from the fluid inlet and outlet can be formed by the use of special end modules, each having a single groove therein, the grooves of the end modules co-operating with those of the modules forming the last longitudinal section to form the end loop.

Alternatively, the end loop may be formed by using by-pass grooves provided in the outer modules of at least the last longitudinal section.

If desired, more than one tube can be used on a single substrate, each provided with its own fluid inlet and outlet and each following an individual double serpentine path. The path followed by at least one of the tubes must be such that, throughout at least the greater part of its length, the incoming part of the tube lies adjacent to and at a substantially constant distance from the return part of the tube.

The invention will now be described in more detail with reference to the drawings, in which :-

Figure 1 is a highly schematic plan view of a heating device according to the invention using a modular system for the substrate;

Figure 2 is a schematic plan view of one of the modules of the substrate of Figure 1;

Figure 3 is a schematic side sectional view of part of the substrate surface of the heating device of Figures 1 and 2;

Figure 4 is a schematic plan view of a further form of heating device according to the invention; and

Figure 5 is a schematic plan view of yet another form of heating device according to the invention.

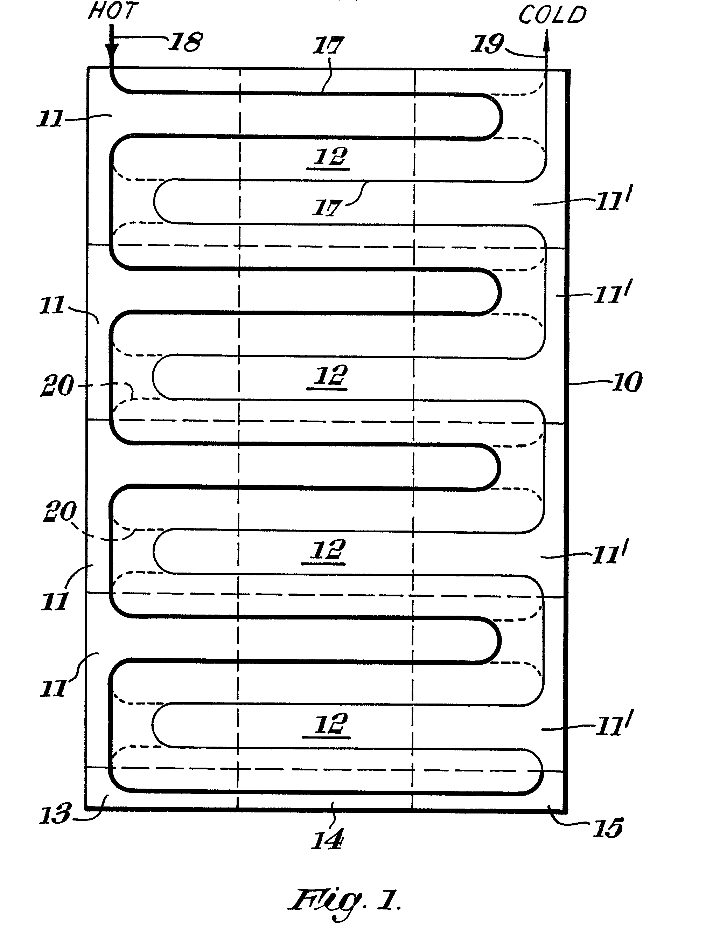

As shown in Figure 1, the heating device comprises a rectangular substrate block 10 of expanded polystyrene made up of fifteen rectangular modules 11, 11', 12, 13, 14 and 15 butted together. As will be explained hereinafter, only five different types of module are required. The substrate has a thickness of about 6 inches (15 cm). The modules may be held in abutting relationship merely by means of the flexible pipe used, but are preferably held in place to form the substrate within a frame, e.g. of aluminium.

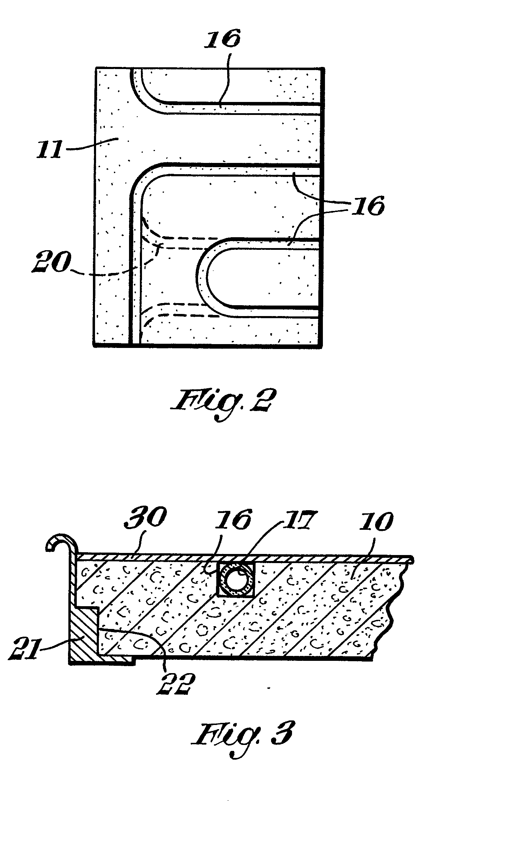

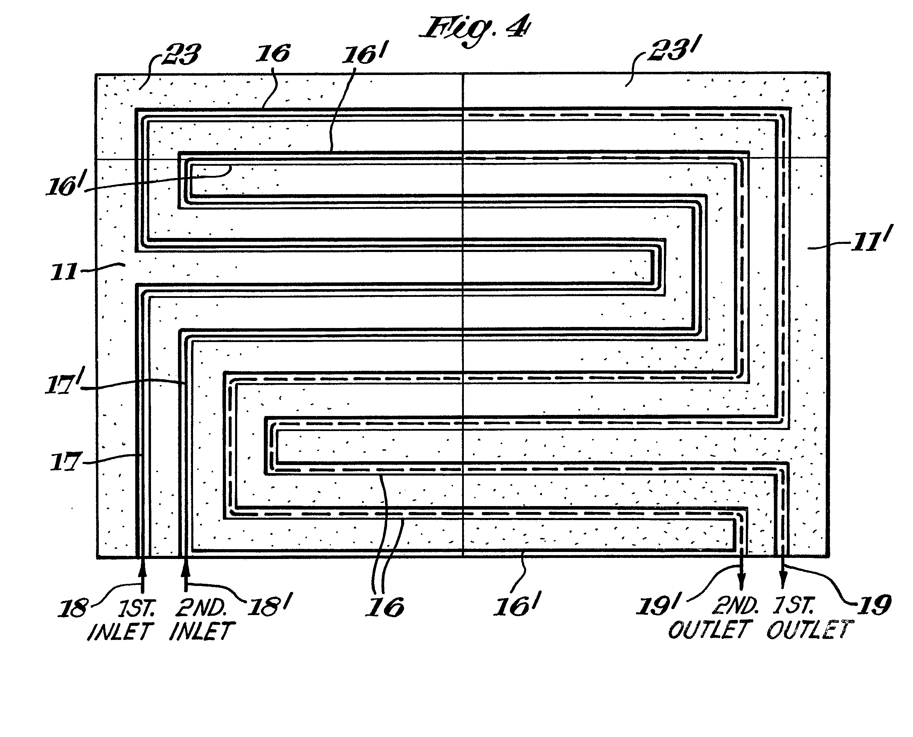

As shown most clearly in Figure 3, in the surface of the substrate, there is provided a groove 16, of a depth and width sufficient to accommodate a very flexible, finned or ridged plastics tube 17 having a diameter of about 1 inch (2.5 cm). The ends of the tube project at one side of the substrate 10 to provide a heating fluid inlet 18 and outlet 19 (Figure 1). In order to increase the uniformity of heat output, the substrate surface may be covered with a metal foil 30 (Figure 3).

As shown in Figure 2, each of the modules 11 has a plurality of grooves 16 cut into the surface thereof which when combined with modules 12, which is provided with four straight parallel grooves and the grooves of module 11' (which is simply a module 11 in the inverted position) provide a continuous groove forming a part of the serpentine path followed by the heating fluid. Further parts of the path in the longitudinal direction to cover an extended area can be provided by further sets of modules 11, 12 and 11', whilst in order to extend the heated surface area in the transverse direction, it is merely necessary to provide more modules 12 between the end modules 11 and 11'. The fluid inlet 18 is provided at one end module 11 and the fluid outlet 19 in the other end module 11'. This simplifies the groove pattern of the modules. To provide a connection between the outgoing and returning paths the modules 13, 14 and 15 are provided at the end of the substrate remote from the fluid inlet 18 and outlet 19. It will be appreciated that when only a relatively narrow substrate is required, it is possible to do without the central modules 12, the modules 11 and 11' being abutted directly against one another.

In Figure 1, the hotter outgoing part of the pipe has been indicated in thicker lines than the colder returning part. It will be seen that over substantially the whole path, (the exception being the initial part of the path from the hot fluid inlet), a hotter part of the path always lies parallel to and at a substantially constant distance from a colder part of the path, so that, by and large, the heat output from the pipe 16 over the area of the substrate surface is substantially uniform.

If the serpentine path of the pipe 16 is required to terminate for any reason within the length of a module set 11, 12, 11', the pipe may be arranged to follow one of a plurality of by-pass grooves 20 indicated in Figures 1 and 2. This substantially increases the flexibility of the modular system used, and makes it possible to use only two types of module 11, 11' and 12 (or even one in the case of a narrow substrate), since the end loop of the serpentine path can be formed by using the by-pass grooves, and eliminating the end modules 13, 14 and 15.

When the modules are held together by means merely of the tube 17, the modules may have smooth unbroken side walls. If, however, the modules forming the substrate are held together by a framework, for example, formed by aluminium extruded sections, as indicated at 21 in Figure 3, the side walls of the modules may be rebated as at 22 to receive the aluminium section.

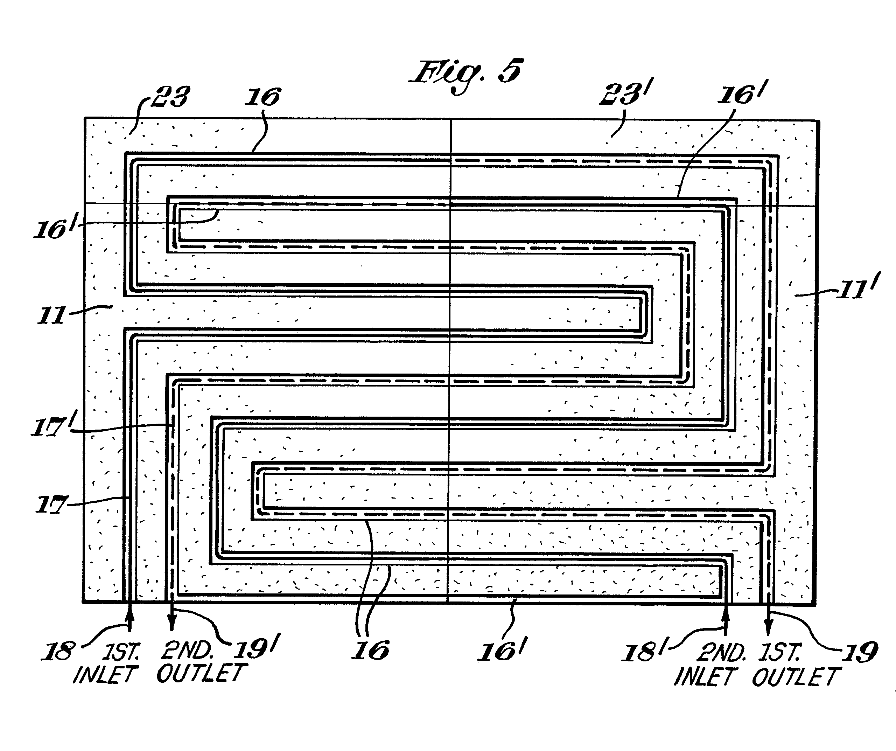

Other forms of heating device according to the invention employing a modular construction for the substrate, but in which more than one tube is used, are illustrated in highly schematic plan view in Figures 4 and 5. (In these Figures, the hotter incoming path of the tubes is indicated in full lines, and the cooler return path of the tubes in broken lines).

In the embodiments of both Figures 4 and 5, two flexible tubes 17 and 17', each follows its own double serpentine path through an expanded polystyrene substrate, the tube 17 from an inlet 18 to an outlet 19, and the tube 17' from an inlet 18' to an outlet 19'. The paths followed by the two tubes are parallel to one another over corresponding parts of their length. In both embodiments, the substrate is formed by two identical modules 11, 11', each provided with an identical pattern of grooves 16, such that when one module 11 is abutted against the other module 11', which is inverted, the grooves define the two serpentine paths for the tubes 17, 17'. The end loop of the paths for the two tubes remote from the inlets and outlets is formed by two end modules 23, 23', which are mirror-images and which each contain one complete groove defining one end loop, and a half-groove 16' which cooperates with a half-groove in the abutting module 11, 11' to define half of the other end loop.

The two embodiments of Figures 4 and 5 are differentiated by the fact that in the embodiment of Figure 4, the two inlets 18, 18' are both located adjacent to one another at one end of the edge of the substrate and the two outlets 19, 19' are similarly located adjacent to one another at the other end of the substrate edge, whilst in the embodiment of Figure 5, the inlet for one tube 17 is located adjacent to the outlet for the other tube 17' at one end of the substrate edge, whilst the inlet for the other tube 17' and the outlet for the one tube 17 are located adjacent to one another at the other end of the substrate edge. This means that in the embodiment of Figure 4, for only one of the tubes (17') does the incoming path lie adjacent to and at a substantially constant distance from the return path, whilst in the embodiment of Figure 5, this is true for both tubes. Both embodiments, however, provide an adequately uniform heat output over the whole area of the substrate.

As in the embodiment of Figure 1, the special end modules 23, 23' can be dispensed with, if suitable by-pass grooves are provided in the modules 11, 11', by means of which the end loops can be formed.

The heating medium used will normally be hot water, although other fluid media, such as hot air, or other hot gases, may be used. The water may be at a temperature of up to 95°C, although for most installations, a temperature of 30 - 40°C is adequate. The heat output per unit area of the substrate surface can be varied by controlling the rate of water flow and the temperature of the inlet water. Typical figures for heat output are 10 - 25 watts/sq. ft. (108 - 270 watts/sq. m.) for a water inlet temperature of 55°C to 15 - 75 watts/sq. ft. (161 - 807 watts/sq. m.) for a water inlet temperature of 60°C. The use of expanded polystyrene as the substrate leads to very good heat insulation and negligible heat losses.

The device of the present invention, owing to the possibility of using a modular contruction can be used over any area from 6 - 600,000 sq. ft. (0.5 to 55,000 sq. m.), and can be used to provide soil or bench warming only or air warming only, or a combination of both. The device is cheap to produce, light and clean to handle, quickly and easily installed and can be used virtually anywhere. Its running costs are low, since it utilises high heat transfer-efficiency gilled or ribbed plastics tubing of relatively large diameter, its heat losses are minimal and it can make use of low grade heat sources, such as reject or waste heat, or even geothermal or solar energy. It can be used in conjunction with or to replace a conventional heating system. The heat output is fully variable with a rapid temperature response using simple control equipment which can be fully automated, if required. The maintenance costs are low, since the moulded polystyrene modules preferably used are durable and can be replaced individually should it be necessary. The device is of very light weight and high strength and is therefore particularly suitable for use on mobile benches. Finally, heating pipe obstacles as encountered with conventional systems and which interfere with cropping, can be reduced to a minimum, since 95% of all the heating pipes can be hidden within a groove in the substrate.

While the heating device of the present invention is particularly suitable for use in greenhouses, it can be used for any other heating purpose to which it is suited and for such a purpose may, if required, be mounted vertically on a wall. It can even be adapted for use as a cooling device (for example, in an overhot greenhouse) merely by introducing a cooling medium instead of a heating medium at the inlet 18; substantially uniform cooling over the substrate surface area can thus be achieved. Finally, it is also suitable for use as a solar panel, in which water passing through the tube or tubes is heated by solar radiation.

0047633

CLAIMS

1.   An area heating or cooling device comprising
a heat-insulating substrate having arranged thereon a
flexible tube for the passage of a fluid heating or
cooling medium from a fluid inlet to a fluid outlet
characterised in that said fluid inlet and said fluid
outlet are arranged at the same edge of the substrate,
but adjacent opposite ends thereof, and said tube is
arranged to follow a continuous double serpentine
path from said inlet to said outlet at the substrate
surface such that, throughout at least the greater
part of the length of the path, the incoming part of
the tube carrying hotter (or respectively cooler)
fluid in use lies adjacent to and at a substantially
constant distance from the return part of the tube
carrying cooler (or respectively hotter) fluid in
use, thereby producing a substantially uniform output
or absorption of heat respectively over substantially
the whole surface area of the substrate.

2.   A device as claimed in Claim 1, wherein said
tube is a ridged highly flexible plastics tube.

3.    A device as claimed in Claim 2, wherein
said tube has a diameter of about 2.5 cm.

4.   A device as claimed in any one of Claims
1 to 3, wherein said substrate is made of a foamed
plastics material, preferably foamed polystyrene.

5.   A device as claimed in any one of the
preceding Claims, wherein said substrate is rectangular in shape and has a thickness of 6 - 7 cm.

6.    A device as claimed in any one of the preceding Claims, wherein said tube is arranged in a groove cut into the surface of said substrate of sufficient width and depth to accommodate the tube and following the required serpentine path.

7.    A device as claimed in Claim 6, wherein said substrate is made up of a plurality of modules, each of said modules including grooves forming a part of said serpentine path.

8.    A device as claimed in Claim 7, wherein only a limited number of different types of module, each having a different pattern of grooves, are used, various numbers of modules of the different types in different orientations being used to form said path.

9.    A device as claimed in Claim 7 or Claim 8, wherein said modules are rectangular in plan, said modules including a module having grooves cut into the surface thereof such that when one said module is brought into abutting relationship with an identical module in the inverted position, the grooves in the two modules together form a section of said serpentine path, further sections of said path in the longitudinal direction of said substrate being formed by further pairs of modules in abutting relationship, the grooves of each of said pairs of modules co-operating with the grooves of laterally abutting pairs of modules to form said path, said inlet and outlet being respectively provided on the two modules forming a
pair at one end of the substrate.

10.    A device as claimed in Claim 9 as dependent
on Claim 8, wherein the modules of each of said
pairs of modules do not abut directly against one
another but are separated by a central module of
different design having parallel grooves therein which
co-operate with the grooves of the two end modules
to form a part of said path.

11.    A device as claimed in Claim 9 or Claim 10,
wherein the end loop of said substrate remote from the
fluid inlet and outlet, is formed by special end
modules each having a single groove therein, the
grooves of said end modules together with those of
the end pair or group of modules to define said end
loop.

12.    A device as claimed in Claim 9 or Claim 10,
wherein the end loop of said double serpentine path
at the end of said substrate remote from the fluid
inlet and outlet, is formed by the provision of by-
pass grooves in the modules of each of said pairs.

13.    A device as claimed in any one of Claims 1 to 7,
wherein a plurality of tubes is used, each following a
respective double serpentine path from a respective
inlet to a respective outlet, the serpentine path
followed by at least one of said tubes being such that,
throughout at least the greater part of the length
of the path, the incoming part of the tube lies adjacent to and at a substantially constant distance from the return part of the tube.

14.    A device as claimed in any one of Claims 6 to 12 or in Claim 13 as appendant to Claim 6 or Claim 7, wherein the surface of said substrate is covered with a metal foil.

Fig. 1.

Fig. 2

Fig. 3

*Fig. 4*

23  16  16'                          23'

16'

11                                              11'

17'

17

18  1ST.  2ND.  18'        16      16'     19'  2ND. 1ST.  19
    INLET  INLET                            OUTLET OUTLET

3/4

0047633

*Fig. 5*

18 1ST. INLET   2ND. OUTLET 19′   16   16′   18′ 2ND. 1ST. INLET OUTLET   19

4/4

0047633